# EUROPEAN PATENT APPLICATION

(11) **EP 3 425 792 A1**
(43) Date of publication of application: **09.01.2019**
(21) Application number: 17759310.0
(22) Date of filing: 21.02.2017
(51) Int. Cl.: H02S 10/30

(54) **ELECTRONIC DEVICE FOR CONVERTING HEAT INTO ELECTRICAL ENERGY**

(30) Priority: 03.03.2016 ES 201630253
(71) Applicant: Flores Peña, Pablo, 28015 Madrid (ES)
(72) Inventor: Flores Peña, Pablo, 28015 Madrid (ES)
(74) Representative: Rebate Conde, Maria Fernanda
(86) International application number: PCT/ES2017/070093
(87) International publication number: WO 2017/149177

(57) **Abstract**

An electronic device for converting heat into electrical energy involves polarising and filtering infrared radiation present in the environment, by heating an inner reflective body by greenhouse effect, radiation concentration and exposure to photodiodes. For that purpose, a metal sheet (1) in contact with the environment, a polarising layer (2) adhered to the inside of the sheet (1), a polarising filter (4) and a metal sheet (5) separated from the polarising filter (4) and carrying the photodiodes (6) that convert radiation into electrical energy are used.

## Description

### OBJECT OF THE INVENTION

The present invention relates to an electronic device that uses an assembly of radiant bodies, polarising filters for polarising the infrared radiation and photodiodes to extract electrical energy from internal energy contained in a particular environment.

Therefore, the object of the invention is to provide a device through which the radiant energy of an environment is used to be transformed in electrical energy.

As such, and with regards to industrial application, the device can be used as a cooling system or a system for obtaining electrical energy from a heat source.

### BACKGROUND OF THE INVENTION

There is currently a multitude of devices that use photodiodes to convert radiation into an electrical signal; however, the performance thereof is very limited. In addition, other devices use the Seebeck effect to extract energy from a temperature difference between two bodies (or Peltier if the aim is to cool a hot body). However, these devices have several limitations. The main limitation is performance since the power obtained is low compared to the energy available in the hot source. Another drawback in the case of thermoelectric devices is the need to have a cold source or heat sink.

Patent document JP2006086465 is a device that has a visible light filter layer located between an infrared absorbent layer and a thermoelectric converter to prevent the visible light from impacting on the thermoelectric converter. The filter layer has a thickness of 0.5 to 0.6 micrometres. The infrared absorbent layer is formed on a silicon substrate in order to absorb the impact of the infrared rays and to then convert them into heat.

The thermoelectric converter is located in the upper portion of a diaphragm formed in the upper portion of the silicon substrate. The thermoelectric converter has a pn junction diode to convert the temperature change of the heat generated by the infrared absorption layer into an electrical signal.

Patent document JPS61147568 relates to an infrared radiation image sensor. In order to enable a photodiode to be actuated at room temperature, it does so through a method wherein a receiving portion of an array of photodiodes is covered with a thin film in order to convert incoming infrared rays into electrical signals. A p-type region and an n-type region are successively formed on an n-type substrate.

Document US2010079721 describes multilayer laminates comprising chiral nematic liquid crystals. It relates to multilayer laminates that have one or more layers comprising twisted nematic liquid crystals and one or more layers of a polymeric sheet. The twisted nematic liquid crystal layers reflect infrared radiation.

Patent document SG146516 discloses a street lighting system and consists of a pole; a solar energy generator comprising a solar concentrator; a photovoltaic module, and a mechanical actuation module; a rechargeable accumulator battery electronically connected to the solar energy generator; a lighting module powered by the rechargeable storage battery; a solar tracking sensor; a day/night sensor; a rain/snow sensor; and a position controller to actuate the mechanical actuation module.

It has the photovoltaic module that is in the solar concentrator and the mechanical actuation module connected to the solar concentrator to adjust the position thereof; a rechargeable storage battery electronically connected to the solar energy generator to receive, store and provide an output for the generated electrical energy; a lighting module that extends from the pole and which is powered by the rechargeable battery; a solar tracking sensor to determine the relative orientation of the solar concentrator to the impacting solar light; a day/night sensor to detect the transition from day to night; a rain/snow sensor to detect rain or snow; and a position controller to receive and process the signals from the solar tracking sensor, day/night sensor and rain/snow sensor, and actuate the mechanical actuation module. It is used in a street lighting system. The public lighting system is driven by cost-efficiency, with great energy savings and a lasting solar energy generator, and is equipped with a very efficient heat dissipation system.

As such, these are devices that are significant in size, with reduced performance, wherein the cooling process is slow, which require mobile pieces that lead to lower robustness and structural complexity.

### DESCRIPTION OF THE INVENTION

The device contemplated herein provides a completely satisfactory solution to the problem set out above in each and every one of the aspects mentioned.

In accordance with the invention, it is possible to use a device made up of a radiant body in contact, through one of the faces thereof, with the environment that is to be cooled and with a polarising element for polarising the infrared radiation through the other; a filter for infrared radiation in contact with the front film, separated by a certain distance from a second radiant body on which photodiodes that are sensitive to infrared radiation are placed, optionally being preceded by a concentrator element, such that the radiation impacting on the sensitive portion of the photodiode is concentrated.

This configuration enables a device that can extract a certain amount of energy from an environment and convert it into electrical energy to be obtained. Furthermore, the assembly must be thermally insulated in order to prevent energy losses.

It is also possible to do without the first radiant body in contact with the environment such that the radiation penetrates directly into the device and the latter can be used as a photoelectric cell.

Optionally, the polarising film of twisted nematic material can be replaced by a film of enantiomeric material such that the radiation is polarised depending on the privileged orientation thereof.

The main advantages of this device compared to conventional devices is its small size, thus enabling the miniaturisation thereof, the increase in performance and fast cooling, as well as the robustness thereof as it lacks mobile pieces. Another advantage is that there is no need to use a heat sink as a cold source.

### DESCRIPTION OF THE DRAWINGS

As a complement to the description provided below, and for the purpose of helping to make the characteristics of the invention more readily understandable, in accordance with a preferred practical embodiment thereof, said description is accompanied by a set of figures, which by way of illustration and not limitation represent the following:

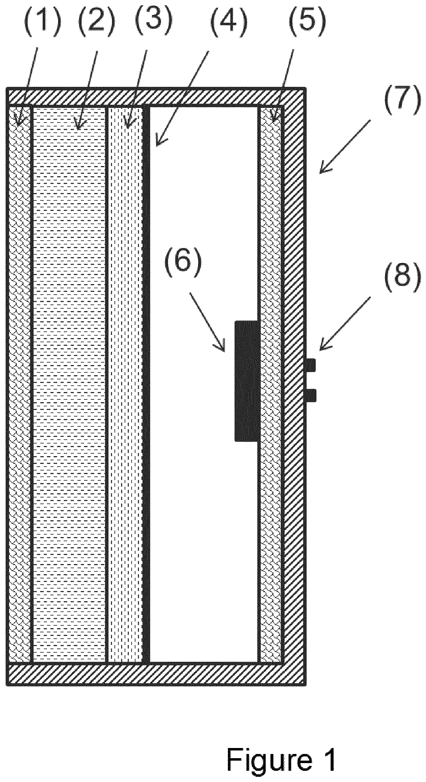

Figure 1 shows a cross-sectional view of an electronic device for converting heat into electrical energy carried out in accordance with the object of the present invention.

### PREFERRED EMBODIMENT OF THE INVENTION

In light of the aforementioned figure, it can be seen how the device has a thin sheet (1) of metal, for example granulated steel, such that the face in contact with the environment is rough and is affixed on the opposite face, which is also rough, a polarising element for polarising the infrared radiation (2) which polarises it vertically, for example. This can be achieved, for example, by means of a film of twisted nematic material adhered to a glass substrate (3) striped in the required polarisation direction.

It is also possible to draw antennae on the sheet (1), for example only polishing the shape of the antennae on the inner face of the metal, such that the polarisation thereof is that which is desired. It is also possible to apply a magnetic field that vertically polarises the radiation or use a Fresnel lens arranged in the opposite direction to the radiation, such that the radiation is polarised according to the desired orientation. Then, a film acting as a polarising filter (4), serving as a filter of the horizontal polarised radiation, is arranged such that it only lets the vertical polarised radiation pass through.

Then, and separated by a certain distance, a metal sheet (5), with the same characteristics as the sheet (1), which receives all the polarised radiation, and which due to being rough on the front face thereof eliminates the polarisation of the reflected radiation, is arranged such that the majority thereof is not capable of passing through the return filter and impacts again on the inner sheet, thus heating it, or on photodiodes (6) which carry out the definitive conversion of the electromagnetic radiation to electrical energy. It is possible to optionally arrange a concentrator element that concentrates the radiation of the intermediate body on the sensitive portion of the photodiodes. The assembly is adiabatically insulated by means of an insulation layer (7), the only outlet being the cables necessary to extract the resulting energy, for example output electrodes (8), and to turn the device on or off.

The operation described results in the sheet (1) in contact with the environment being cooled, being able to continue absorbing energy from the environment, while the metal sheet (5) is heated, more efficiently radiating energy towards the photodiode.

Optionally, the first metal sheet (1) can be excluded, such that the environmental radiation impacts directly on the polarising filter (4).

With regards to the polarising means, these are made of a magnet or an electromagnet or a Fresnel lens arranged in the opposite direction to the radiation.

Said Fresnel lens would be arranged between the polarising filter (4) and the metal sheet (5).

The described device can be used as a cooling system or a system for obtaining electrical energy from a heat source. An application that combines both objectives is the use of this device to cool mobile phone and computer processors, thus reducing battery consumption and increasing autonomy. Another direct application would be as air conditioning or as a cooler in cold production. It is also possible to use it as an energy converter in solar sanitary hot water systems, obtaining electrical energy from hot water and greatly improving the performance of photovoltaic systems.

In general, it is possible to use it in industrial or domestic processes to recover energy that would be otherwise lost in the form of heat; for example, in exhaust pipes in motor vehicles and even as an integral part of electric light bulbs.

## Claims

1. An electronic device for converting heat into electrical energy, which uses photodiodes as means for converting radiation into electrical energy, **characterised in that** it comprises polarising means, to which a polarising filter (4) is adhered and which is separated by a space from a metal sheet (5) on which the photodiodes (6) that are sensitive to infrared radiation are placed, with the particular feature that the assembly is covered by an adiabatic insulating layer (7) and has a metal sheet (1) in contact, through the inner face thereof, with the polarising means.

2. The electronic device for converting heat into electrical energy according to claim 1, **characterised in that** the polarising means are made of a polarising layer (2) for polarising the infrared radiation, made of twisted nematic material.

3. The electronic device for converting heat into electrical energy according to claim 1, **characterised in that** the polarising means are made of antennae drawn on the inner face of the first metal sheet (1).

4. The electronic device for converting heat into electrical energy according to claim 1, **characterised in that** the polarising means are made of a magnet or electromagnet.

5. The electronic device for converting heat into electrical energy according to claim 1, **characterised in that** the polarising means are made of a film of enantiomeric material.

6. The electronic device for converting heat into electrical energy according to claim 1, **characterised in that** the polarising means are made of a Fresnel lens arranged in the opposite direction to the radiation.

7. The electronic device for converting heat into electrical energy according to claim 1, **characterised in that** it includes a Fresnel lens between the polarising filter (4) and the metal sheet (5).
